# EUROPÄISCHE PATENTSCHRIFT

(11) **EP 0 664 404 B1**
(45) Veröffentlichungstag und Bekanntmachung des Hinweises auf die Patenterteilung: **30.09.1998**
(21) Anmeldenummer: 94118552.2
(22) Anmeldetag: 25.11.1994
(51) Int. Cl.: F16B 5/06

(54) **Beschlag für Werkstücke aus Holz oder holzartigem Material**
Fittings for elements made of wood or woodlike material
Ferrure pour éléments en bois ou matériau ressemblant au bois

(30) Priorität: 24.12.1993 CH 3864/93
(43) Veröffentlichungstag der Anmeldung: 26.07.1995
(73) Patentinhaber: Arnold, Lorenz, CH-6330 Cham (CH)
(72) Erfinder: Arnold, Lorenz, CH-6330 Cham (CH)
(74) Vertreter: OK pat AG

(56) Entgegenhaltungen:
- DE-A- 3 437 930
- DE-B- 1 625 393
- DE-C- 961 043
- FR-A- 1 599 861
- FR-A- 2 643 424
- GB-A- 2 229 485

## Beschreibung

Die Erfindung betrifft einen Beschlag für ein Werkstück aus Holz oder holzartigem Material nach dem Oberbegriff des Patentanspruchs **1**.

Unter holzartigen Materialien sind solche zu verstehen, die sich ähnlich wie Holz bearbeiten lassen bzw. ähnliche Eigenschaften haben, also beispielsweise Tischlerplatten, Sperrholz, Schichtholz, Spanplatten, Faserplatten, mitteldichte Faserplatten (MDF), aber auch geschäumte Werkstoffe (Hartschaum) und gegebenenfalls Sandwichplatten mit Kern aus Holz oder geschäumtem Material.

Beschläge auf und an Werkstücken wie z.B. Möbelteilen oder beim Innenausbau von Gebäuden werden sehr häufig mittels Schrauben befestigt. Dies ist allerdings mühsam und auch kostspielig, und ferner ist es nicht immer einfach, die erforderliche Genauigkeit bei der Positionierung der Beschläge zu erreichen.

Als Verbindungsbeschläge für Leimverbindungen finden lamellenförmige Keilverbinder verbreitete Anwendung, die in bogenförmig gefräste Schlitze in den Werkstücken eingeleimt werden. Auch die herkömmlichen Zapfendübel gehören grundsätzlich in die gleiche Kategorie. Mit diesen Mitteln lassen sich zwar passgenaue Verbindungen herstellen. Jedoch ist beispielsweise das Zusammensetzen und Verleimen von Möbelstücken o. dgl. aus mehreren Teilen sehr umständlich und zeitraubend, weil in mehreren aufeinanderfolgenden Schritten jeweils die Werkstücke zusammengespannt werden müssen und hernach das Abbinden des Leimes abgewartet werden muss. - Bekannt sind auch Zapfendübel aus Kunststoff, die mehrere Umfangsrippen mit sägezahnartigem Profil aufweisen, welche sich ohne Verleimung im umgebenden Material "verhaken" sollen; allerdings lassen sich solche Dübel in manchen gebräuchlichen Werkstoffen, insbesondere in Spanplatten, nicht genügend fest und zuverlässig verankern.

Aus der **DE-B-16 25 393** ist ein Beschlag bekannt, der einen Körper aufweist, welcher in eine Ausnehmung eines Werkstückes eingepresst wird. Der Körper weist einen Verankerungsteil mit einer zickzack-förmigen Kontur auf, die aus mehreren gleichen, aneinander anschliessenden, niedrigen Kegelstumpfmänteln gebildet ist, welche sich jeweils in Einpressrichtung verengen, so dass die äussersten Bereiche der Grundflächen der Kegelstumpfmäntel eine Art anker- bzw. widerhakenähnlicher Teile bilden. Diese sollen sich beim Einpressen elastisch leicht zur Längsmittelachse des Körpers deformieren und anschliessend wieder von der Längsmittelachse weg zurückverformen, um den Körper im Werkstück zu verankern. Diese Anordnung weist den folgenden Nachteil auf: die verhältnismässig massive Ausbildung des Körpers verhindert eine genügende elastische Deformation, so dass beim Einpressen die Ausnehmung des Werkstückes durch den Beschlag erweitert wird; dieser Effekt verschlimmert sich noch durch die Anordnung mehrerer aufeinanderfolgender anker- bzw. widerhakenähnlicher Teile, durch welche insbesondere die wenig tiefen Bereiche der Ausnehmung leiden. Die gegenseitige Befestigung von zwei komplementären Beschlägen, von denen jeder in einem Werkstück verankert ist, beruht auf ähnlichen Prinzipien wie die Befestigung der Beschläge in den Werkstücken und weist dieselben Nachteile auf.

Die **DE-A-34 37 930** beschreibt Beschläge, die entweder lediglich in der Art von Press-Sitzen in den Werkstücken befestigt sind, oder die sägezahnartig querprofilierte Umfangsflächen aufweisen, die Eintiefungen für einen Leimauftrag bilden. Die gegenseitige Befestigung zweier komplementärer Beschläge erfolgt mittels einer Rastverbindung, wobei an einem Beschlag sogenannte Federarme angebracht sind, die während des Zusammenfügens der komplementären Beschläge elastisch ausgelenkt werden und an ihren Enden Rastflächen besitzen, die im montierten Zustand der Beschläge mit Rastflächen am anderen Beschlag zusammenwirken. Die Federarme sind verhältnismässig massiv ausgebildet, so dass zum Zusammenfügen der Werkstücke grosse Kräfte ausgeübt werden müssen. Die Nachteile dieser Anordnung sind darin zu sehen, dass durch diese grossen Kräfte die Werkstükke beschädigt und die nur eingepressten Beschläge ihre Relativlage in den Werkstücken verändern.

Mit der vorliegenden Erfindung soll ein Beschlag der eingangs genannten Art vorgeschlagen werden, der sich in die am Werkstück vorbereitete Vertiefung sehr leicht und einfach einsetzen lässt und auch ohne Leimung einen festen, passgenauen und dauerhaften Sitz gewährleistet.

Diese Aufgabe wird erfindungsgemäss durch einen Beschlag mit den kennzeichnenden Merkmalen des Patentanspruches 1 gelöst. Die damit erreichten Vorteile sind insbesondere darin zu sehen, dass die Montage des Beschlages lediglich durch Einschlagen in die Vertiefung des Werkstücks erfolgt, wobei die Verankerung im Grund der Vertiefung - also nicht in der Nähe der Werkstückoberfläche - zustandekommt, was einen sicheren Halt gewährleistet. Die Lagegenauigkeit ist dabei durch die (vorzugsweise maschinell hergestellte) Vertiefung gegeben, also nicht von der Sorgfalt beim Setzen des Beschlags abhängig.

In einer weiteren Ausgestaltung betrifft die Erfindung gemäss Patentanspruch 8 einen Verbindungsbeschlag, der aus einem Paar von einander angepassten Beschlägen der vorgenannten Art besteht. Mit solchen Verbindungsbeschlägen - wobei jeder Teil des Paares in einem der Werkstücke eingesetzt und verankert wird - sollen Werkstückverbindungen besonders rationell (durch blosses "Zusammenschnappen" der Werkstücke) und mit hoher Passgenauigkeit hergestellt werden können. Bei einer bevorzugten Ausgestaltung der aneinander angepassten Teile des Paares nach Patentanspruch 9 wird erreicht, dass die Werkstücke durch den Verbindungsbeschlag dauernd gegeneinander gezogen werden. Dies ist vor allem beim Herstellen von geleimten Verbindungen sehr erwünscht, indem dann das Anbringen von Spannzwingen o.dgl. von aussen bis zum Abbinden des Leimes normalerweise entfallen kann.

Im folgenden werden verschiedene Ausführungsbeispiele des Erfindungsgegenstandes im Zusammenhang mit der Zeichnung näher beschrieben.
- Fig. 1: zeigt die Ansicht der Flachseite und
- Fig. 2: den Schnitt entlang der Linie II-II in Fig. 1 eines ersten Beschlagteils a,
- Fig. 3: zeigt die Ansicht der Flachseite und
- Fig. 4: die Ansicht der Schmalseite eines zweiten Beschlagteils b,
wobei die Teile a und b aneinander angepasst sind und zusammen einen Verbindungsbeschlag bilden,
- Fig. 5: zeigt den in die Vertiefung eines Werkstücks teilweise eingesetzten Beschlagteil b, in Richtung des Pfeiles B in Fig. 7, d.h. vom Grund der Vertiefung aus gesehen,
- Fig. 6: ist die Teilansicht des in ein Werkstück eingesetzten Beschlagteils a, in Richtung des Pfeiles A in Fig. 1 gesehen,
- Fig. 7: zeigt einen Beschlagteil beim Einsetzen in die Vertiefung eines Werkstücks in einer ersten Phase,
- Fig. 8: zeigt das vollständig im Werkstück eingesetzte und verankerte Beschlagteil nach Fig. 7,
- Fig. 9 bis 11: veranschaulichen drei aufeinanderfolgende Phasen beim Verbinden zweier Werkstücke mittels eines Verbindungsbeschlages, bestehend aus den ein Paar bildenden Beschlagteilen a und b,
- Fig. 12: zeigt in Seitenansicht einen Einzelbeschlag c in Form einer Griffschale,
- Fig. 13: ist der Schnitt entlang der Linie XIII-XIII in Fig. 14 und
- Fig. 14: ist die Draufsicht eines weiteren Ausführungsbeispiels eines Einzelbeschlages d in Gestalt eines Deckenlampen-Reflektors.

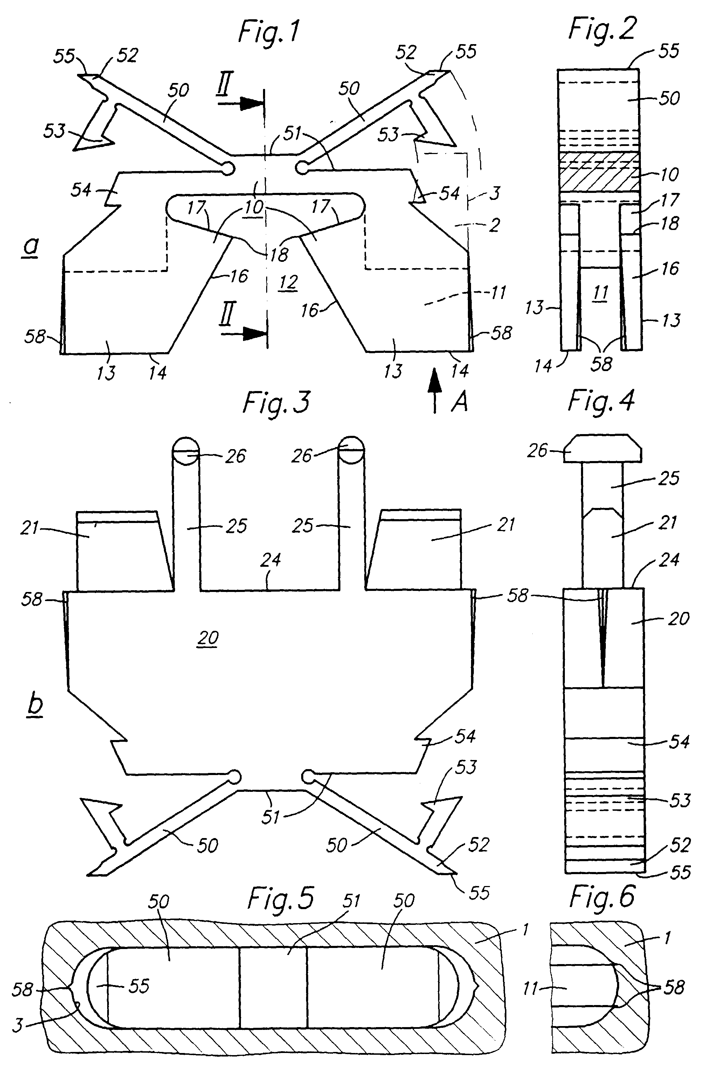

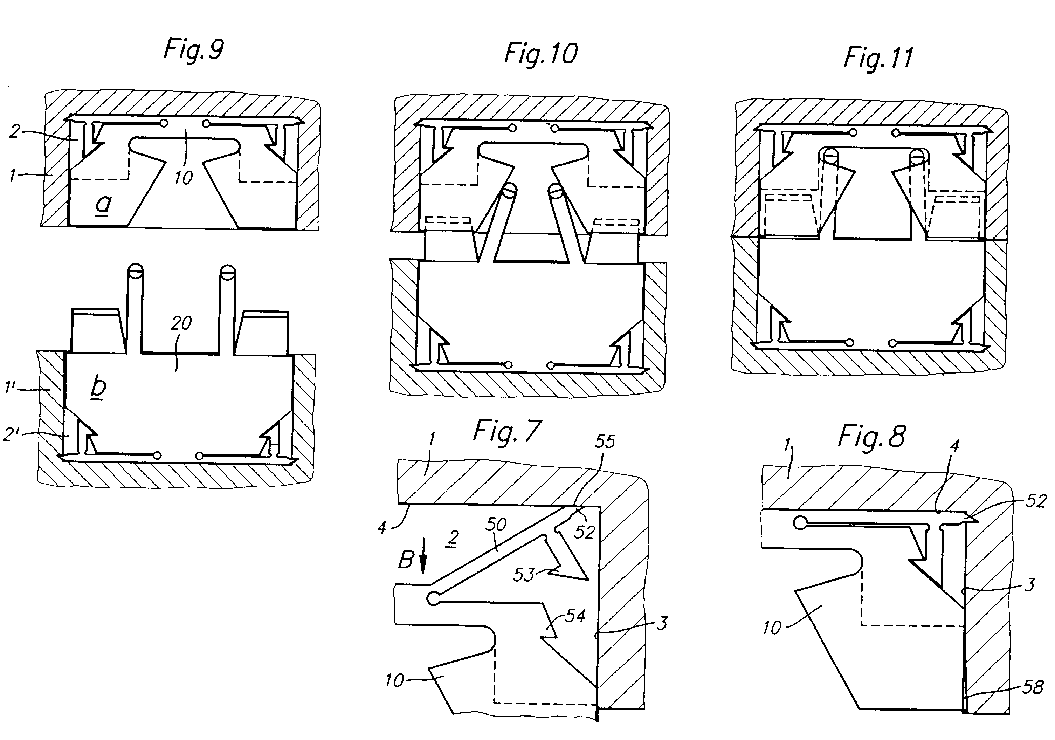

Das erste, in den Figuren 1 - 11 veranschaulichte Ausführungsbeispiel betrifft einen Verbindungsbeschlag zum Verbinden von zwei Werkstücken 1 und 1' (Fig. 9) aus Holz oder holzähnlichem Material. Ein solcher Verbindungsbeschlag besteht aus einem Paar von einander angepassten Beschlägen a, b, die je in einer passenden Vertiefung 2,2' eines der Werkstücke eingesetzt und verankert sind. Im folgenden sollen zuerst die (an beiden Beschlagteilen a und b gleich ausgebildeten) für die Verankerung im Werkstück massgeblichen Partien sowie der Vorgang der Verankerung selbst (Fig. 7 und 8) beschrieben werden, und erst anschliessend anhand der Fig. 9 - 11 die Verbindung der Werkstücke 1 und 1' mit Hilfe solcher Verbindungsbeschläge.

Der Beschlag a weist einen Körper 10 und der Beschlag b einen Körper 20 auf. Diese Körper 10, 20 sind im wesentlichen prismatisch und weisen den gleichen, vorzugsweise flachovalen Querschnitt auf (Fig. 5). Die Körper der Beschläge passen somit in vorbereitete Vertiefungen 2 bzw. 2' (Fig. 7 und 9), die zweckmässigerweise maschinell mittels einem Fingerfräser hergestellt werden und eine Bodenfläche 4 und Seitenwände 3 aufweisen. Die hier beschriebenen und dargestellten Beschläge sind vorzugsweise als einteilige Kunststoff-Spritzgussteile gestaltet, insbesondere aus einem hochwertigen Kunststoff wie z.B. Polykarbonat. Der flachovale Querschnitt kann z.B. etwa 8 - 10 mm breit und 30 - 40 mm lang sein. Seitlich am Körper 10 bzw. 20 können Führungsrippen 58 vorgesehen sein, die in Richtung des Einsetzens in die Vertiefung 2 verlaufen und sich während dem Einsetzen in das benachbarte Wandmaterial des Werkstücks einpressen.

An derjenigen Stirnfläche 51 des Körpers 10 bzw. 20, die der Vertiefung 2 bzw. deren Boden 4 zugekehrt ist, sind zwei zueinander symmetrische Arme 50 angelenkt, die der Verankerung des Beschlages im Werkstück dienen. Vor dem Einsetzen des Körpers in die Werkstück-Vertiefung nehmen die Arme 50 eine erste Position ein, in der sie vom Körper schief abstehen (Fig. 1, 3 und 7). Die freien Enden 52 der Arme 50, die gegen die Wand 3 der Vertiefung 2 weisen, sind vorzugsweise meisselartig ausgebildet, und zwar durch eine Schrägfläche 55, die in der genannten ersten Position der Arme etwa parallel zur Stirnseite 51 der Körpers 10 bzw. 20 steht. In der erwähnten ersten oder Ausgangs-Position der Arme 50 stehen die freien Enden 52 wegen der Schieflage der Arme zum Körper hinter dem Körper bzw. dessen Projektion zurück, wie deutlich aus den Fig. 1, 3, 5 und 7 hervorgeht. Die Fig. 7 veranschaulicht einen bereits teilweise in eine vorbereitete Werkstück-Vertiefung 2 eingeführten Beschlag. Dieser ist gerade soweit eingesetzt, dass die freien Enden 52 bzw. deren Schrägflächen 55 am Grund 4 der Vertiefung anstehen. Der Körper 10 des Beschlags ist dann am Umfang bereits an der Wand 3 der Vertiefung geführt, und die seitlichen, konischen Führungsrippen 58 am Körper 10 beginnen sich in das Werkstückmaterial "einzugraben". Beim weiteren Einschieben des Beschlags (normalerweise Eintreiben mittels Hammer oder dgl.) werden nun die angelenkten Arme 50 gegen den Körper hin geschwenkt, bis sie bei vollständig eingesetztem Beschlag am Körper flach anliegen (zweite Position der Arme 50 gemäss Fig. 8). Im Verlaufe dieser Schwenkbewegung nähern sich die freien Enden 52 in den Eckbereichen der Vertiefung 2 der Wand 3 und stehen schliesslich über den Körper 10 hinaus vor, wobei sie in das benachbarte Wandmaterial des Werkstücks eindringen.

An jedem Arm 50 ist gegen das freie Ende 52 hin eine federnde, zum Beschlag-Körper hin abstehende Klinke 53 angeordnet. Diese wirkt mit einer am Körper vorgesehenen Klinkennase 54 zusammen. Beim vorerwähnten Schwenken der Arme 50 zum Körper hin werden die Klinken 53 an den Klinkennasen 54 zunächst ausgelenkt, und erst im letzten Moment, bei vollständig angelegten Armen, schnappen die Klinken 53 hinter den Nasen 54 ein. Dadurch bestehen Rastmittel, welche die Arme 50 in ihrer zweiten Position, d.h. bei vollständig in die Werkstück-Vertiefung eingesetztem Beschlag, in bezug auf den Beschlag-Körper sichern. Solche Rastmittel könnten indessen auch anders ausgebildet sein, etwa in Form eines gesicherten "Druckknopfes", wie sie z.B. zum Sichern von Kunststoff-Etiketten oder -Ausweisen bekannt sind.

Somit ist der bis auf den Grund der Vertiefung 2 eingesetzte bzw. eingeschlagene Beschlag durch die im Werkstückmaterial eingedrungenen und "verkrallten", meisselartigen Enden der Arme 50 solide verankert und ausserdem in der passenden Vertiefung 2 genau geführt und positioniert. Im Falle der Verbindungsbeschläge a, b wird zweckmässigerweise die Tiefe der Vertiefung 2 so gewählt, dass die am eingesetzten Beschlag aussenliegende Stirnfläche (14 in Fig. 1, 24 in Fig. 3) um ein geringes Mass hinter der Oberfläche des Werkstücks zurücksteht, wie unten in Fig. 8 zu erkennen ist. Dadurch wird sichergestellt, dass an den zu verbindenden Werkstücken deren einander zugekehrten Oberflächen - und nicht die Stirnflächen der Beschläge - satt aneinander anliegen (Fig. 11). falls besonders hohe Belastungen an den Beschlägen zu erwarten sind, kann es zweckmässig sein, vor deren Einsetzen in den Eckbereichen der Vertiefung 2 etwas Leim aufzutragen, um an den Stellen, an denen die Enden 52 in das Werkstück eindringen, das Material zusätzlich zu verfestigen.

Im folgenden werden nun anhand der Figuren 1 - 4 weitere Merkmale der Beschläge a und b beschrieben, wie sie bei der paarweisen Verwendung solcher einander angepasster Beschläge als Verbindungsbeschlag von Bedeutung sind.

Beim ersten Beschlag a eines solchen Paares weist der Körper 10 eine Ausnehmung 12 auf, die von seiner dem zweiten Beschlag b zuzukehrenden Stirnseite 14 ausgeht. Die Ausnehmung 12 ist im wesentlichen durch zwei symmetrisch zueinander liegende Gleitflächen 16 und anschliessende Keilflächen 17 begrenzt, derart, dass die Ausnehmung ausgehend von der Stirnfläche 14 sich zunehmend verengt und anschliessend wieder erweitert. Die engste Stelle der Ausnehmung 12 befindet sich an den Uebergängen zwischen den Flächen 16 und 17, wobei die dort dargestellten Kanten 18 auch gerundet sein können. Die Winkelstellung der Keilflächen 17 ist so, dass diese Flächen, ausgehend von der engsten Stelle, in bezug auf die Stirnfläche 14 einen Anzug aufweisen. In der Mitte des flachovalen Körpers 10 verläuft ein Längsschlitz 11, welcher jede der Flächen 16 und 17 in zwei getrennte Teilflächen unterteilt, wie insbesondere aus der Fig. 2 ersichtlich ist. Als Anzug wird eine leichte Schräge, im allgemeinen von wenigen Winkelgraden bis maximal etwa 45 grad bezeichnet. Der zweite Beschlag b des Paares weist zwei Ankerglieder 25 auf, die von seiner dem ersten Beschlag a zuzukehrenden Stirnseite 24 bzw. vom Körper 20 ausgehen. Vorzugsweise sind ferner zwei von der gleichen Stirnseite 24 abstehende, ebenfalls symmetrisch angeordnete Keile 21 vorgesehen, welche in den vorerwähnten Schlitz 11 am Beschlag a passen. Die Ankerglieder 25 sind als biegeeleastische Schäfte gestaltet, deren freie Enden 26 bei hergestellter Verbindung mit je einer der Keilflächen 17 des ersten Beschlages a zusammenwirken.Der Abstand der freien Enden 26 untereinander ist in der Ausgangslage der Ankerglieder, in der diese also nicht verbogen sind (Fig. 3) erheblich grösser als die Breite der engsten Stelle der Ausnehmung 12 am ersten Beschlag a. Zweckmässigerweise sind die Ankerglieder 25, wie aus den Fig. 3 und 4 ersichtlich, hammerartig ausgebildet, wobei der querstehende, nach beiden Seiten vorstehende "Hammerkopf" an den freien Enden der biegsamen Schäfte 25 sitzt und die Schäfte im Schlitz 11 des ersten Beschlages a gleiten können.

Zur Verwendung als Verbindungsbeschlag wird je ein Teilbeschlag a bzw. b eines Paares an je einem Werkstück 1, 1' in einer vorbereiteten Vertiefung 2, 2' eingesetzt und verankert, wie weiter oben beschrieben. Mit den zu verbindenden Werkstücken in der Lage nach Fig. 9 einander gegenübergestellt, bilden die Beschlagteile a und b eine Schnappverbindung, deren Zustandekommen in den Fig. 10 und 11 dargestellt ist. Werden die Werkstücke 1, 1' bzw. die Beschlagteile a und b gegeneinander geführt, so stossen die Ankerglieder 25 mit ihren freien Enden 26 gegen die geneigten Gleitflächen 16. In der Folge werden die Ankerglieder zunehmend gegeneinander gebogen. Gleichzeitig greifen die Keile 21 des Beschlags b in den Schlitz 11 des Beschlags a ein, wodurch die beiden Werkstücke bereits zueinander positioniert und ausgerichtet werden. Ein solcher Uebergangszustand beim Zusammenfügen der beiden Werkstücke ist in Fig. 10 dargestellt. Die biegsamen, elastischen Schäfte der Ankerglieder 25 werden zunehmend gegeneinander verbogen, bis die Enden 26 die engste Stelle der Ausnehmung 12 erreicht haben.

Nach Durchtritt an den Kanten 18, kurz vor der gegenseitigen Berührung der beiden Werkstücke, schnellen die beiden Ankerglieder schlagartig auseinander, wobei die "Hammerköpfe" 26 an den Keilflächen 17 auflaufen. Infolge der dabei auftretenden Keilwirkung werden die beiden Beschlagteile a und b, und mit ihnen die Werkstücke 1, 1', kräftig gegeneinandergezogen. Dadurch entsteht eine sichere, dauerhaft unter Zug stehende Verbindung zwischen den Werkstücken. Die erwähnte Zugkraft ist besonders auch dann erwünscht, wenn es sich um geleimte Verbindungen handelt. Der vor dem Zusammenfügen an den Berührungsflächen der Werkstücke aufgetragene Leim kann dann sicher abbinden, ohne dass die Werkstücke von aussen zusammengespannt werden müssen.

Bei grösseren Werkstücken wird man selbstverständlich mehrere solche Verbindungsbeschläge in Reihe in geeigneten Abständen anbringen. Durch entsprechendes Anbringen der Vertiefungen 2 lassen sich ohne weiteres Winkelverbindungen zwischen Platten (z.B. bei Schränken) oder Verbindungen zwischen den Stirnkanten von zueinander fluchtenden Platten (z.B. bei Wänden) usw. herstellen.

Bei der beschriebenen Ausführung des Verbindungsbeschlags mit dem flachovalen Querschnitt der Körper 10 und 20 ergeben sich zusätzliche Vorteile dadurch, dass einerseits die Einzelteile quer zur Längsrichtung des Querschnittes dank dem Eingriff der Keile 21 im Schlitz 11 genau geführt sind, dass aber anderseits in Längsrichtung, dank möglichem Gleiten der Ankerglied-Enden 26 an den Keilflächen 17, gewisse Lageabweichungen zulässig sind. Insbesondere können dadurch bei mehreren in Reihe angeordneten Verbindungsbeschlägen gewisse Abweichungen bei den Längsabständen der Vertiefungen 2 toleriert werden.

Der vorstehend beschriebene Verbindungsbeschlag ergibt starre Verbindungen zwischen den Werkstücken. Abweichend hiervon sind jedoch auch Verbindungsbeschläge aus einem Paar von einander angepassten Beschlag-Hälften denkbar, die bewegliche Verbindungen ergeben, wobei aber jede der genannten Hälften in der weiter oben beschriebenen Weise in einer Werkstück-Vertiefung verankert ist. Insbesondere lassen sich in entsprechender Weise auch Scharnierbeschläge realisieren.

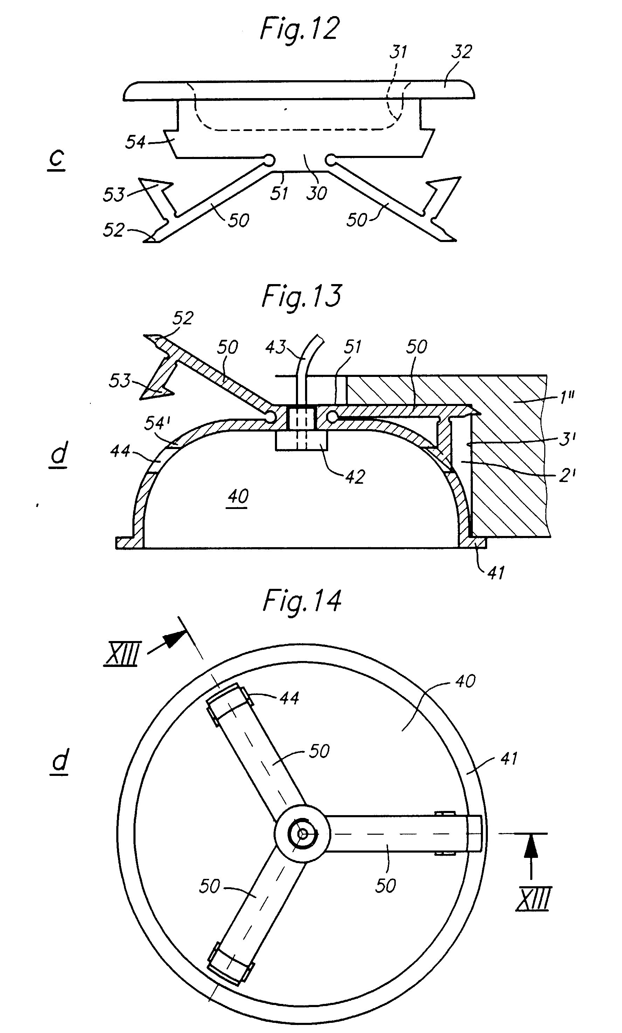

Die nachfolgenden Ausführungsbeispiele nach Fig. 12 - 14 betreffen keine Verbindungsbeschläge, sondern Beispiele von Einzelbeschlägen, welche von der oben beschriebenen Art der Verankerung im Werkstück Gebrauch machen. Die entsprechenden Teile am jeweiligen Beschlag, welche zur Verankerung dienen, sind mit den gleichen Bezugszahlen bezeichnet wie die betreffenden Teile bei den Beschlägen a und b.

Das Beispiel eines Beschlages c nach Fig. 12 zeigt die Anwendung der weiter oben beschriebenen Verankerung am Beispiel einer Griffschale, wie sie insbesondere an Schiebetüren, in eine vorbereitete Vertiefung eingesetzt, verwendet werden. Im flachovalen oder kreisrunden Körper 30 ist die Griffmulde 31 vorgesehen, die von einem (nachher am Werkstück aussenliegenden) Flansch 32 umgeben ist. Die an der entgegengesetzten Stirnseite 51 des Beschlags c angebrachten Verankerungsmittel mit den Armen 50 und Rastmitteln 53, 54 entsprechen denjenigen der Beschläge a und b, und die Wirkungsweise ist diejenige, wie anhand der Fig. 7 und 8 beschrieben.

Der Beschlag d nach Fig. 13 und 14 hat eine kreisrunde Gestalt. Es handelt sich um einen Reflektor für kleine Halogenlampen, der in eine kreisrund geschnittene Vertiefung 2' in einer Dekkenplatte 1'' oder dergleichen einzusetzen ist. Mit 42 ist der Lampensockel und mit 43 die Stromzuleitung bezeichnet. Der schalenförmige Reflektorkörper 40 ist von einem Flansch 41 umgeben, der den Rand der im Werkstück eingefrästen Vertiefung abdeckt. Entsprechend der kreisrunden Gestalt des Körpers 40 sind an seiner Stirnseite 51 drei radial und je um 120° versetzt angeordnete Arme 50 angebracht. Die Klinkennasen 54' für die Klinken 53 sind an durchgehenden Oeffnungen 44 in der Wand des Körpers 40 ausgebildet. In der Fig. 13 zeigt die linke Hälfte den Ausgangszustand mit dem Arm 50 in der ersten Position, und die rechte Hälfte der Figur zeigt den Endzustand mit im Werkstück eingesetztem und verankertem Beschlag, wobei der Arm 50 im Wandmaterial des Werkstücks "verkrallt" und in seiner zweiten Position am Körper 40 gesichert ist.

Im vorliegenden Fall wäre die Verankerung auch wieder lösbar, indem die Klinken 53 vom Innern des Körpers 40 her aus ihrer Verrastung gelöst werden können. Auch ist es denkbar, die Arme 50 nicht einteilig mit dem Körper 40 aus Kunststoff im Spritzgiessverfahren herzustellen, sondern z.B. als sternförmig gestanztes und gebogenes Blechteil, welches im Zentrum mit dem Körper 40 verbunden ist.

Mit dem gleichen Verankerungsprinzip können zahlreiche weitere Beschläge ausgeführt werden, so z.B.Kleiderhaken, Vorhangstangen-Halter usw. In jedem Fall erfolgt die Montage sehr rasch und einfach, insbesondere schraubenlos und ohne Werkzeug, und es wird eine passgenaue, sichere Verankerung erzielt.

## Patentansprüche

1. Beschlag (**a, b, c, d**) für ein Werkstück (**1**) aus Holz oder holzartigem Material, mit einem zum Einsetzen und Verankern in einer passenden Vertiefung (2) des Werkstückes (**1**) bestimmten Körper (**10, 20, 30, 40**),
**dadurch gekennzeichnet,**
- dass an der beim Einsetzen vorderen Stirnseite des Körpers (**10, 20, 30, 40**) mindestens zwei Arme (**50**) angelenkt sind, die in einer ersten Position vor dem Einsetzen des Körpers (**10, 20, 30, 40**) von diesem schief abstehen, wobei die freien Enden (**52**) der Arme (**50**) den Körper (**10, 20, 30, 40**) seitlich nicht überragen,
- dass beim eingesetzten Körper (**10, 20, 30, 40**) die genannten Arme (**50**) eine zweite Position einnehmen, in der die Arme (**50**) zum Körper (**10, 20, 30, 40**) hin geschwenkt sind, wobei die freien Enden (**52**) der Arme (**50**) über den Körper (**10, 20, 30, 40**) vorstehen, und
- dass zwischen dem Körper (**10, 20, 30, 40**) und den Armen (**50**) wirkende Rastmittel (**53, 54**) vorhanden sind, die in der genannten zweiten Position der Arme (**50**) einrasten und die Arme (**50**) in Bezug auf den Körper (**10, 20, 30, 40**) sichern.

2. Beschlag nach Anspruch 1, dadurch gekennzeichnet, dass die freien Enden (52) der Arme (50) meisselartig ausgebildet sind, vorzugsweise mittels einer Schrägfläche (55), die in der genannten ersten Position etwa parallel zur genannten Stirnseite (51) des Körpers steht.

3. Beschlag nach Anspruch 1, dadurch gekennzeichnet, dass die genannten Rastmittel durch eine von jedem Arm (50) zum Körper hin abstehende federnde Klinke (53) und eine am Körper vorhandene Klinkennase (54) gebildet sind.

4. Beschlag nach Anspruch 1, gekennzeichnet durch seitlich am Körper vorstehende, in Richtung des Einsetzens in die Vertiefung (2) verlaufende Führungsrippen (58), die zum Einpressen in das benachbarte Wandmaterial bestimmt sind.

5. Beschlag nach einem der vorangehenden Ansprüche, dadurch gekennzeichnet, dass der Körper (10, 20, 30) einen flachovalen Querschnitt aufweist und dass zwei zueinander symmetrisch angeordnete Arme (50) vorhanden sind.

6. Beschlag nach einem der Ansprüche 1 bis 4, dadurch gekennzeichnet, dass der Körper (40) einen kreisrunden Querschnitt aufweist und dass drei radial und je um 120° versetzt angeordnete Arme (50) vorhanden sind.

7. Beschlag nach einem der vorangehenden Ansprüche, dadurch gekennzeichnet, dass er als einteiliges Kunststoff-Spritzgussteil gestaltet ist.

8. Verbindungsbeschlag für Werkstücke, bestehend aus einem Paar (a, b) einander angepasster Beschläge nach einem der Ansprüche 1 bis 7.

9. Verbindungsbeschlag nach Anspruch **8**,
**dadurch gekennzeichnet,**
dass die beiden ein Paar bildenden Beschläge (**a, b**) zwecks Erzeugung einer gegenseitigen Schnappverbindungen einander so angepasst sind, dass
- ein erster Beschlag (**a**) in seinem Körper (**10**) eine von seiner dem zweiten Beschlag (**b**) zuzukehrenden Stirnseite (**14**) ausgehende, sich zunehmend verengende und anschliessend sich zunehmend wieder erweiternde Ausnehmung (**12**) aufweist, die seitlich in ihrem sich verengenden Teil durch je zwei symmetrisch zueinanderliegende Gleitflächen (**16**) und in ihrem sich erweiternden Teil durch zwei symmetrisch zueinanderliegende Keilflächen (**17**) begrenzt ist, wobei jede Keilfläche (**17**) mit der an sie anschliessenden Gleitfläche (**16**) an der engsten Stelle der Ausnehmung (**12**) eine Kante (**18**) bildet und gegenüber der vorgenannten Stirnfläche (**14**) geneigt ist, und
- der zweite Beschlag (**b**) an seiner dem ersten Beschlag (**a**) zuzukehrenden Stirnseite (**24**) zwei Ankerglieder (**25**) in Form biegeelastischer Schäfte aufweist, deren freie Enden (26) zum Zusammenwirken mit je einer der Keilflächen (17) des ersten Beschlages (a) bestimmt sind, wobei der Abstand der genannten Enden (26) bei ungebogenen Ankergliedern (25) grösser ist als die Breite der engsten Stelle der Ausnehmung (12) am ersten Beschlag (a).

10. Verbindungsbeschlag nach Anspruch 9, dadurch gekennzeichnet, dass am ersten Beschlag (a) die Gleitflächen (16) und die Keilflächen (17) durch einen im Körper (10) vorhandenen Schlitz (11) unterteilt sind, und dass am zweiten Beschlag (b) die Ankerglieder (25) hammerartig ausgebildet sind, je mit in den genannten Schlitz (11) passendem biegsamem Schaft und an dessen freiem Ende querstehendem Hammerkopf.

11. Verbindungsbeschlag nach Anspruch 9, dadurch gekennzeichnet, dass der eine Beschlag (a) in seinem Körper (10) einen von seiner genannten Stirnseite (14) ausgehenden Schlitz (11) und der andere Beschlag (b) mindestens einen über seine genannte Stirnseite (24) vorstehenden, in den Schlitz (11) des erstgenannten Beschlages (a) passenden Führungskeil (21) aufweist.

## Claims

1. Fitting (**a**, **b**, **c**, **d**) for an element (**1**) made of wood or woodlike material, having a body (**10, 20, 30, 40**) intended for inserting and anchoring in a matching depression (**2**) of the element (**1**),
***characterized in that,***
- on the end face of the body (**10, 20, 30, 40**) at the front during insertion there are articulated at least two arms (**50**), which in a first position before the insertion of the body (**10, 20, 30, 40**) project at an angle from the latter, the free ends (**52**) of the arms (**50**) not protruding laterally beyond the body (**10, 20, 30, 40**),
- with the body (**10, 20, 30, 40**) inserted, the said arms (**50**) assume a second position, in which the arms (**50**) are swivelled towards the body (**10, 20, 30, 40**), the free ends (**52**) of the arms (**50**) projecting beyond the body (**10, 20, 30, 40**), and
- there are locking means (**53**, **54**), which act between the body (**10, 20, 30, 40**) and the arms (**50**) and, in the said second position of the arms (**50**) engage and secure the arms (**50**) with respect to the body (**10, 20, 30, 40**).

2. Fitting according to Claim **1**,
***characterized in that,***
the free ends (**52**) of the arms (**50**) are of a chisellike design, preferably by means of an oblique face (**55**), which, in the said first position, is approximately parallel to the end face (**51**) of the body.

3. Fitting according to Claim **1**,
***characterized in that***
the said locking means are formed by a resilient catch (**53**), projecting from each arm (**50**) towards the body, and a catch lug (**54**), provided on the body.

4. Fitting according to claim **1**,
***characterized***
by guiding ribs (**58**), which project laterally from the body, run in the direction of insertion into the depression (**2**) and are intended for pressing into the neighbouring wall material.

5. Fitting according to one of the preceding claims,
***characterized in that***
the body (**10, 20, 30**) has a flatly oval cross-section and in that there are two arms (**50**) arranged symmetrically with respect to each other.

6. Fitting according to one of Claims **1** to **4**,
***characterized in that***
the body (**40**) has a circularly round cross-section and in that there are three arms (**50**) arranged offset radially and by 120° in each case.

7. Fitting according to one of the preceding claims,
***characterized in that***
it is designed as a one-piece plastic injection moulding.

8. Connection fitting for elements, comprising a pair (**a, b**) of matching fittings according to one of Claims **1** to **7**.

9. Connection fitting according to Claim **8**,
***characterized in that,***
for the purpose of producing a mutually snap-fitting connection, the two fittings (**a, b**) forming a pair are matched in such a way that
- a first fitting (**a**) has in its body (**10**) a recess (**12**) which starts from its end face (**14**), facing the second fitting (**b**), narrows increasingly and subsequently widens again increasingly and is bounded laterally in its narrowing part by two sliding faces (**16**), lying symmetrically with respect to each other, and in its widening part by two tapering faces (**17**), lying symmetrically with respect to each other, each tapering face (**17**) forming an edge (**18**) with the adjoining sliding face (**16**) at the narrowest point of the recess (**12**) and being inclined with respect to the aforementioned end face (**14**), and
- the second fitting (**b**) has on its end face (**24**), facing the first fitting (**a**), two anchoring members (**25**) in the form of flexurally elastic shanks, the free ends (**26**) of which are intended for interaction with in each case one of the tapering faces (**17**) of the first fitting (**a**), the distance between the said ends (**26**) with the anchoring members (**25**) unbent being greater than the width of the narrowest point of the recess (**12**) on the first fitting (**a**).

10. Connection fitting according to Claim **9**,
***characterized in that***
on the first fitting (**a**) the sliding faces (**16**) and the tapering faces (**17**) are subdivided by a slit (**11**) provided in the body (**10**), and in that on the second fitting (**b**) the anchoring members (**25**) are of a hammerlike design, each with a flexible shank, which fits into the said slit (**11**), and a transverse hammerhead at the free end of the said shank.

11. Connection fitting according to Claim **9**,
***characterized in that***
the one fitting (**a**) has in its body (**10**) a slit (**11**), starting from its said end face (**14**), and the other fitting (**b**) has at least one guiding wedge (**21**), which projects beyond its said end face (**24**) and fits into the slit (**11**) of the first-mentioned fitting (**a**).

## Revendications

1. Ferrure (a,b,c,d) pour un élément (1) en bois ou en matériau ressemblant au bois, comprenant un corps destiné à être introduit et ancré dans un évidement adapté (2) de l'élément (1),
caractérisé en ce que:
- sur la face frontale du corps (10, 20, 30, 40) introduite en premier sont articulés au moins deux bras (50) qui, dans une première position, avant l'introduction du corps (10, 20, 30, 40), font saillie obliquement sur celui-ci, les extrémités libres (52) des bras (50) ne faisant pas saillie latéralement au-delà du corps (10, 20, 30, 40),
- lors de l'introduction du corps (10, 20, 30, 40), les bras précités (50) prennent une deuxième position dans laquelle les bras (50) sont basculés vers le corps (10, 20, 30, 40) et leurs extrémités libres (52) font saillie au-delà du corps (10, 20, 30, 40), et
- il est prévu des moyens d'encliquetage (53, 54) qui agissent entre le corps (10, 20, 30, 40) et les bras (50) et qui, dans ladite deuxième position des bras (50), s'encliquettent et fixent les bras (50) par rapport au corps (10, 20, 30, 40).

2. Ferrure suivant la revendication 1, caractérisée en ce que les extrémités libres (52) des bras (50) sont réalisées en forme de ciseau, de préférence au moyen d'une surface biaise (55) qui, dans ladite première position, est à peu près parallèle à ladite face frontale (51) du corps.

3. Ferrure suivant la revendication 1, caractérisée en ce que lesdits moyens d'encliquetage sont constitués par un loquet élastique (53) en saillie sur chaque bras vers le corps, et par un taquet d'accrochage (54) prévu sur le corps.

4. Ferrure suivant la revendication 1, caractérisée par des nervures de guidage (58) en saillie latérale sur le corps et s'étendant dans la direction de l'introduction dans l'évidement (2), ces nervures étant destinées à s'enfoncer dans le matériau de paroi adjacent.

5. Ferrure suivant l'une des revendications précédentes, caractérisée en ce que le corps présente une section en ovale aplati, et en ce qu'il est prévu deux bras symétriques l'un par rapport à l'autre.

6. Ferrure suivant l'une des revendications 1 à 4, caractérisée en ce que le corps (40) possède une section circulaire et en ce qu'il est prévu trois bras (50) radiaux et décalés de 120° les uns par rapport aux autres.

7. Ferrure suivant l'une des revendications précédentes, caractérisée en ce qu'elle est constituée par une seule pièce injectée en matière plastique.

8. Dispositif de liaison pour éléments, constitué d'une paire (a, b) de ferrures suivant l'une des revendications 1 à 7, adaptées l'une à l'autre.

9. Dispositif de liaison suivant la revendication 8, caractérisé en ce que les deux ferrures (a, b) formant une paire sont adaptées l'une à l'autre en vue de former une liaison par encliquetage réciproque, de telle manière que:
- une première ferrure (a) présente dans son corps (10) un évidement (12) qui part de sa face frontale (14) tournée vers la deuxième ferrure (b), se rétrécit progressivement puis s'élargit de nouveau progressivement, lequel évidement est délimité, dans sa partie qui se rétrécit, par deux surfaces de glissement (16) symétriques en vis à vis et, dans sa partie qui s'élargit, par deux surfaces d'arrêt (17) symétriques en vis à vis, chaque surface d'arrêt formant une arête avec la surface de glissement (16) à laquelle elle se raccorde, à l'emplacement le plus étroit de l'évidement (12), et étant inclinée par rapport à la surface frontale (14) précitée, et
- la seconde ferrure (b) comporte, sur sa face frontale (24) tournée vers la première ferrure (a), deux organes d'ancrage (25) réalisés sous la forme de tiges fléchissant élastiquement dont les extrémités libres (26) sont destinées à coopérer chacune avec l'une des surfaces d'arrêt (17) de la première ferrure (a), l'écartement desdites extrémités (26) à l'état non fléchi des organes d'ancrage (25) étant supérieur à la largeur de l'emplacement le plus étroit de l'évidement (12) de la première ferrure (a).

10. Dispositif de liaison suivant la revendication 9, caractérisé en ce que, sur la première ferrure (a), les surfaces de glissement (16) et les surfaces d'arrêt(17) sont divisées par une fente (11) prévue dans le corps (10), et en ce que, sur la seconde ferrure (b), les organes d'ancrage sont réalisés en forme de marteaux dont chacun comporte une tige qui s'adapte dans la fente précitée (11) et une tête de marteau disposée transversalement à son extrémité libre.

11. Dispositif de liaison suivant la revendication 9, caractérisé en ce que la première ferrure (a) comporte dans son corps (10) une fente (11) qui part de sa surface frontale précitée (14), et en ce que l'autre ferrure (b) comporte au moins une clavette de guidage (21) qui fait saillie sur la surface frontale précitée (24) de cette ferrure et qui s'adapte dans la fente (11) de la première ferrure (a).
